# EUROPEAN PATENT APPLICATION

(11) **EP 4 644 478 A1**
(43) Date of publication of application: **05.11.2025**
(21) Application number: 23912292.2
(22) Date of filing: 28.12.2023
(51) Int. Cl.: C08L 11/02, C08C 19/20, C08G 75/0263, C08L 95/00

(54) **SULFUR COPOLYMERIZATION CHLOROPRENE LATEX COMPOSITION, METHOD FOR PRODUCING SAME, MODIFIED ASPHALT EMULSION COMPOSITION CONTAINING SULFUR COPOLYMERIZATION CHLOROPRENE LATEX COMPOSITION, AND METHOD FOR PRODUCING SAME**

(30) Priority: 28.12.2022 JP 2022212498
(71) Applicant: Resonac Corporation, Tokyo 105-7325 (JP)
(72) Inventor: OHGUMA, Yuya, Tokyo 105-7325 (JP); OGAWA, Noriko, Tokyo 105-7325 (JP)
(74) Representative: Strehl & Partner mbB
(86) International application number: PCT/JP2023/047154
(87) International publication number: WO 2024/143515

(57) **Abstract**

A sulfur-copolymerized chloroprene latex composition containing sulfur-copolymerized chloroprene latex, a nonionic surfactant and a monobasic acid, in which the monobasic acid has a pKa of 4.0 to 6.0, a method for producing the same, and a modified asphalt emulsion composition.

## Description

### Technical Field

The present invention relates to a sulfur-copolymerized chloroprene latex composition, a method for producing the same, a modified asphalt emulsion composition containing a sulfur-copolymerized chloroprene latex composition, and a method for producing the same.

### Background Art

Roads paved with an asphalt material are exposed to sunlight or wind and rain while in service, which causes curing deterioration and generates small cracks. When rainwater permeates through these cracks, water permeates between the asphalt pavement and the roadbed below, which causes the peeling of the asphalt pavement. In addition, while the asphalt pavements are in service, aggregate (crushed stone) that is contained in the pavements peels off, and the pavement surface becomes rough.

As a method for rehabilitating asphalt pavements that have deteriorated as described above, there is a chip seal method. The chip seal method is a method in which an asphalt emulsion is sprayed onto an existing asphalt pavement and aggregate is then sprayed and compacted.

To the asphalt emulsion that is used in the chip seal method, it is common to add a rubber elastic polymer as a modifier for the purpose of imparting aggregate graspability.

For example, Patent Literature 1 discloses styrene/butadiene/styrene (SBS), styrene butadiene rubber (SBR), chloroprene latex, and natural rubber as modifiers and particularly discloses chloroprene latex.

### Citation list

### Patent literature

Patent Literature 1: US5180428B

### Summary of Invention

### Technical Problem

However, in asphalt emulsions to which the modifier disclosed in Patent Literature 1 was added, the aggregate graspability was still insufficient, and there was a desire for additional improvement in the aggregate graspability. The strengths of dry films that were obtained from sulfur-copolymerized chloroprene latex were also likely to decrease. Therefore, there was a desire for maintaining the dry film strength high for a long period of time.

An object that one embodiment according to the present invention intends to achieve is to provide a sulfur-copolymerized chloroprene latex composition having excellent aggregate graspability when made into a layered structure containing the sulfur-copolymerized chloroprene latex composition and having excellent storage stability in a film state and a method for producing the same. In addition, an object that another embodiment according to the present invention intends to achieve is to provide a modified asphalt emulsion composition having excellent aggregate graspability and a method for producing the same.

### Solution to Problem

As means for achieving the above-described objects, the following aspects are included.
<1> A method for producing a sulfur-copolymerized chloroprene latex composition, comprising:
   a polymerization step of polymerizing a chloroprene monomer and sulfur to obtain sulfur-copolymerized chloroprene latex; and
   a mixing step of mixing the sulfur-copolymerized chloroprene latex and a monobasic acid having a pKa of 4.0 to 6.0,
   wherein, in at least one step of the polymerization step and the mixing step, the sulfur-copolymerized chloroprene latex and a nonionic surfactant are mixed together.
<2> The method for producing a sulfur-copolymerized chloroprene latex composition according to <1>, wherein the nonionic surfactant includes a polyoxyalkylene structure.
<3> The method for producing a sulfur-copolymerized chloroprene latex composition according to <1> or <2>, wherein the monobasic acid is acetic acid.
<4> A method for producing a modified asphalt emulsion composition, comprising a step of obtaining a composition containing a sulfur-copolymerized chloroprene latex composition obtained by the method for producing a sulfur-copolymerized chloroprene latex composition according to <1> or <2> and asphalt.
<5> A sulfur-copolymerized chloroprene latex comprising: sulfur-copolymerized chloroprene latex; a nonionic surfactant; and a monobasic acid,
   wherein the monobasic acid has a pKa of 4.0 to 6.0.
<6> The sulfur-copolymerized chloroprene latex composition according to <5>, wherein the nonionic surfactant includes a polyoxyalkylene structure.
<7> The sulfur-copolymerized chloroprene latex composition according to <5> or <6>, wherein the monobasic acid is acetic acid.
<8> A modified asphalt emulsion composition comprising: the sulfur-copolymerized chloroprene latex composition according to any one of <5> to <7>; and asphalt.
<9> The modified asphalt emulsion composition according to <8>, further comprising: sand; and aggregate.
<10> The modified asphalt emulsion composition according to <8> or <9>, that is a modified asphalt mixture.

### Advantageous Effects of Invention

According to one embodiment according to the present invention, a sulfur-copolymerized chloroprene latex composition having excellent aggregate graspability when made into a layered structure containing the sulfur-copolymerized chloroprene latex composition and having excellent storage stability in a film state and a method for producing the same are provided.

In addition, according to another embodiment according to the present invention, a modified asphalt emulsion composition having excellent aggregate graspability and a method for producing the same are provided.

### Description of Embodiments

Hereinafter, the contents of the present invention will be described in detail. The contents of constitution conditions to be described below will be described based on typical embodiments of the present invention, but the present invention is not limited to such embodiments.

In the present specification, "to" indicating numerical ranges is used with a meaning of including numerical values before and after "to" as the lower limit value and the upper limit value.

In the present specification, a unit that is shown any of before or after "to" indicating numerical ranges means to indicate the same unit unless particularly otherwise described.

In the present specification, a combination of two or more preferable aspects is a more preferable aspect.

Hereinafter, the present invention will be described in detail.

### <Sulfur-copolymerized chloroprene latex composition>

A sulfur-copolymerized chloroprene latex composition of the present invention contains sulfur-copolymerized chloroprene latex, a nonionic surfactant, and a monobasic acid, and the monobasic acid has a pKa of 4.0 to 6.0.

When the sulfur-copolymerized chloroprene latex composition has the above-described constitution, the storage stability and aggregate graspability of an asphalt emulsion composition to be obtained are excellent. The reasons therefor are not clear, but the following reasons are presumed.

As a result of the present inventors' studies, it is presumed that, when the nonionic surfactant (for example, polyoxyethylene alkyl ether) and the monobasic acid having a pKa of 4.0 to 6.0 are contained in the sulfur-copolymerized chloroprene latex composition, compared with conventional sulfur-copolymerized chloroprene latex compositions containing only a nonionic surfactant, a physical property change of the sulfur-copolymerized chloroprene latex composition is suppressed, whereby the storage stability is excellent when the composition is put into a film state. In addition, a modified asphalt emulsion composition containing the composition is also excellent in terms of the aggregate graspability and is thus presumed to be capable of exhibiting performances as an asphalt emulsion modifier for a long period of time.

Hereinafter, the details of the sulfur-copolymerized chloroprene latex composition will be described.

### <<Sulfur-copolymerized chloroprene latex>>

The sulfur-copolymerized chloroprene latex may be obtained by copolymerizing a 2-chloro-1,3-butadiene monomer (hereinafter, also referred to as "chloroprene monomer") with sulfur in the presence of water, or may be obtained by copolymerizing a chloroprene monomer, a monomer that can be copolymerized with the chloroprene monomer and sulfur in the presence of water.

The monomer that can be copolymerized with the chloroprene monomer is not particularly limited as long as the object of the present invention is not impaired, and examples thereof include 2,3-dichloro-1,3-butadiene, 1-chloro-1,3-butadiene, butadiene, isoprene, styrene, acrylonitrile, acrylic acid, and esters thereof, methacrylic acid, and esters thereof. Among these, the monomer that can be copolymerized with the chloroprene monomer is preferably 2,3-dichloro-1,3-butadiene and 1-chloro-1,3-butadiene and more preferably 2,3-dichloro-1,3-butadiene.

The content of the monomer that can be copolymerized with the chloroprene monomer is preferably within a range of 0 to 20 parts by mass with respect to 100 parts by mass of 2-chloro-1,3-butadiene (chloroprene).

One kind of monomer that can be copolymerized with the chloroprene monomer may be used singly, or two or more kinds thereof may be used in combination. When the content of the monomer that can be copolymerized with the chloroprene monomer is within a range of 0 to 20 parts by mass with respect to 100 parts by mass of 2-chloro-1,3-butadiene (chloroprene), it is possible to favorably maintain the tensile strength.

The solid content of the sulfur-copolymerized chloroprene latex is preferably 0 to 60 mass% and more preferably 20 to 50 mass%. One kind of sulfur-copolymerized chloroprene may be used singly, or two or more kinds thereof may be used in combination.

### <<Sulfur>>

Sulfur that is copolymerized with the chloroprene monomer is not particularly limited as long as the sulfur is composed of substantially a sulfur atom alone and is pure sulfur that is used in a crosslinking agent use for crosslinking a variety of kinds of rubber. The sulfur is preferably pure sulfur that acts on a carbon-carbon double bond portion in the monomer unit of a conjugated diene. The form of the sulfur is not particularly limited and may be, for example, powdered sulfur, precipitated sulfur, colloidal sulfur, insoluble sulfur, or highly dispersed sulfur. The shape of the sulfur is not particularly limited and may be cyclic or chain-like.

### <<Gel content rate>>

From the viewpoint of excellent aggregate graspability, the gel content rate of the sulfur-copolymerized chloroprene latex composition is preferably 0 to 90 mass%, more preferably 5 to 85 mass% and still more preferably 15 to 75 mass%.

The gel content rate is obtained as the content rate of the sulfur-copolymerized chloroprene latex, which is insoluble in tetrahydrofuran, (hereinafter, also referred to as "tetrahydrofuran-insoluble component"). The tetrahydrofuran-insoluble component can be obtained by a measurement method to be described in Examples to be described below.

The content rate of the sulfur in the sulfur-copolymerized chloroprene latex is preferably 0.01 to 5.0 mass%, more preferably 0.05 to 0.6 mass% and still more preferably 0.1 to 0.5 mass% with respect to the total mass of the sulfur-copolymerized chloroprene latex from the viewpoint of superior aggregate graspability when the sulfur-copolymerized chloroprene latex composition has been made into a layered structure.

### [Method for producing sulfur-copolymerized chloroprene latex]

A method for copolymerizing the chloroprene monomer and the sulfur (method for producing sulfur-copolymerized chloroprene latex) is not particularly limited, emulsion polymerization is preferable, and industrially, aqueous emulsion polymerization is particularly preferable.

As an emulsifier for the emulsion polymerization, compounds that act as a protective colloid such as an anionic surfactant, a nonionic surfactant, and a polyvinyl alcohol are preferable. Among these, the emulsifier for the emulsion polymerization is preferably an anionic surfactant.

Specific examples of the anionic surfactant include rosin acid soap, sodium salts of naphthalenesulfonic acid condensates, sodium salts of dodecylbenzenesulfonic acid, and sodium salts of dodecylsulfuric acid.

Specific examples of the nonionic surfactant include polyoxyethylene alkyl ether, sorbitan fatty acid ester, and polyoxyethylene sorbitan fatty acid ester.

In the case of using rosin acid soap as the emulsifier, the amount of the rosin acid soap used is preferably 3 to 8 parts by mass and more preferably 3 to 5 parts by mass with respect to 100 parts by mass of 2-chloro-1,3-butadiene (chloroprene) or 100 parts by mass in total of the chloroprene monomer and the monomer that can be copolymerized with the chloroprene monomer in terms of the equivalent of rosin acid.

When the amount of the rosin acid soap is 3 parts by mass or more, favorable emulsification is possible, favorable control of the generation of polymerization heat can be obtained, the generation of an aggregate is suppressed, and favorable product appearance can be obtained.

When a dispersant such as a condensation products of sodium naphthalene sulfonate and formaldehyde is added in the copolymerization reaction between the chloroprene monomer and the sulfur, the generation of the above-described problem can be suppressed even in a system where emulsification is performed with 3 parts by mass or less of rosin acid.

As a polymerization initiator, a usual radical polymerization initiator can be used. For example, in the case of emulsion polymerization, a usual organic or inorganic peroxide such as benzoyl peroxide, potassium persulfate, or ammonium persulfate or an azo compound such as azobisisobutyronitrile is used. Together with the radical polymerization initiator, a promotor such as anthraquinone sulfonate, potassium sulfite, or sodium sulfite can be used as appropriate.

Commonly, in the production of the sulfur-copolymerized chloroprene latex, a molecular amount regulator (chain transfer agent) may be used during polymerization for the purpose of obtaining a copolymer having desired molecular weight and distribution.

The chain transfer agent is not particularly limited, and examples thereof include alkyl xanthogen disulfides represented by O,O-diisopropyl dithiobis(thioformate), and alkyl mercaptans represented by dodecylmercaptan.

One kind of chain transfer agent may be used singly, or two or more kinds thereof may be used in combination.

In the production of the sulfur-copolymerized chloroprene latex, when a predetermined polymerization rate is reached, it is common to add a polymerization terminator and terminate the reaction for the purpose of obtaining a polymer having desired molecular weight and distribution. The polymerization terminator is not particularly limited, and it is possible to use a terminator that is usually used, for example, phenothiazine, para-t-butylcatechol, hydroquinone, hydroquinone monomethylether, or diethylhydroxylamine.

In the method for producing the sulfur-copolymerized chloroprene latex, the amount of the sulfur compounded is preferably 0.01 to 5.0 parts by mass, more preferably 0.05 to 0.6 parts by mass, and still more preferably 0.1 to 0.5 parts by mass with respect to 100 parts by mass of 2-chloro-1,3-butadiene (chloroprene) or 100 parts by mass in total of chloroprene and the monomer that can be copolymerized with the chloroprene monomer.

In a case where the amount of the sulfur compounded is 0.01 parts by mass or more, the crosslinking reactivity of the sulfur-copolymerized chloroprene latex is improved. When 5.0 parts by mass or less of the sulfur is added, a favorable polymerization conversion rate can be obtained without impairing the polymerization reaction.

Regarding the sulfur used for the reaction, the total amount of sulfur used for compounding is considered to remain in the sulfur-copolymerized chloroprene latex.

### <<Monobasic acid>>

The sulfur-copolymerized chloroprene latex composition contains a monobasic acid having a pKa of 4.0 to 6.0.

pKa represents an acid dissociation constant (pKa) in an aqueous solution and is described in, for example, Handbook of Chemistry (II) (revision 4, 1993, edited by The Chemical Society of Japan, Maruzen Publishing Co., Ltd.). As the value of the acid dissociation constant pKa becomes lower, a larger acid strength is shown. In the case of being not described in the handbook of chemistry, the pKa is the theoretical value of a value in water at 25°C.

The monobasic acid is an acid that is ionized to emit one hydrogen ion from one molecule.

Examples of the monobasic acid having a pKa of 4.0 to 6.0 include acetic acid, propionic acid, butyric acid, valeric acid, hexanoic acid, enanthic acid, and caprylic acid. Among these, the monobasic acid is preferably acetic acid.

The pKa of the monobasic acid is 4.0 to 6.0 and preferably 4.0 to 5.0.

### <<Nonionic surfactant>>

The sulfur-copolymerized chloroprene latex composition contains a nonionic surfactant.

The nonionic surfactant is not particularly limited, and examples thereof include polyoxyethylene alkyl ether, sorbitan fatty acid ester, and polyoxyethylene sorbitan fatty acid ester. Among these, the nonionic surfactant is preferably a nonionic surfactant including a polyoxyalkylene structure and more preferably polyoxyethylene alkyl ether.

The polyoxyethylene alkyl ether is not particularly limited, and examples thereof include polyoxyethylene lauryl ether, polyoxyethylene cetyl ether, polyoxyethylene stearyl ether, polyoxyethylene oleyl ether, polyoxyethylene myristyl ether, polyoxyethylene octyl dodecyl ether, polyoxyalkylene alkyl ether, polyoxyphenylene distyrenated phenyl ether, polyoxyethylene tribenzyl phenyl ether, polyoxyalkylene alkenyl ether, and polyoxyethylene nonylphenyl ether.

The nonionic surfactant may be obtained by synthesis or may be a commercially available product.

Examples of the commercially available product include EMULGEN (registered trademark) 102KG, 103, 104P, 105, 106, 108, 109P, 120, 123P, 130K, 147, 150, 210P, 220, 306P, 320P, 350, 404, 408, 409PV, 420, 430, 705, 707, 709, 1108, 1118S-70, 1135S-70, 1150S-60, 4085, 2020G-HA, 2025G, LS-106, LS-110, LS-114, MS-110, A-60, A-90, B-66, A-500, PP-290, LATEMUL (registered trademark) PD-420, PD-430, PD-430S, PD450, RHEODOL (registered trademark) SP-L10, SP-P10, SP^S10V, SP-S20, SP-S30V, SP-O10V, SP-O30V, AS-10V, AO-10V, AO-15V, TW-L120, TW-L106, TW-P120, TW-S120V, TW-S106V, TW-S320V, TWO120V, TW-O106V, TW-O320V, TW-IS399C, SUPER TW-L120, 430V, 440V, 460V, MS-50, MS-60, MO-60, MS-165V, EMASOL (registered trademark) L-10V, P-10V, S-10V, O-10V, EMANON 1112, 3199V, 3299V, 3299RV, 4110, CH-25, CH-40, CH-60(K), CH-80, AMIET (registered trademark) 102, 105, 105A, 302, 320, AMINON (registered trademark) PK-02S, L-02, and HOMOGENOL (registered trademark) L-95 (manufactured by Kao Corporation).

### <Method for producing sulfur-copolymerized chloroprene latex composition>

A method for producing a sulfur-copolymerized chloroprene latex composition includes a polymerization step of polymerizing a chloroprene monomer and sulfur to obtain sulfur-copolymerized chloroprene latex (hereinafter, also simply referred to as "polymerization step") and
a mixing step of mixing the sulfur-copolymerized chloroprene latex and a monobasic acid having a pKa of 4.0 to 6.0 (hereinafter, also simply referred to as "mixing step"), and,
in at least one step of the polymerization step and the mixing step, the sulfur-copolymerized chloroprene latex and a nonionic surfactant are mixed together.

A sulfur-copolymerized chloroprene latex composition that is obtained by the method for producing a sulfur-copolymerized chloroprene latex composition including the above-described steps has excellent storage stability and also has excellent aggregate graspability when made into a layered structure containing an asphalt emulsion composition containing the composition.

### <<Polymerization step>>

The polymerization step is the same meaning as the method for producing the sulfur-copolymerized chloroprene latex, and a preferable aspect is also the same. The polymerization step also includes an aspect in which a chloroprene monomer and sulfur are polymerized and a nonionic surfactant is then mixed together.

### <<Mixing step>>

The mixing step is a step of mixing the sulfur-copolymerized chloroprene latex and a monobasic acid having a pKa of 4.0 to 6.0.

The sulfur-copolymerized chloroprene latex and the monobasic acid that are used in the mixing step are the same meaning as the sulfur-copolymerized chloroprene latex and the monobasic acid in the above-described sulfur-copolymerized chloroprene latex composition, and preferable aspects are also the same.

As the sulfur-copolymerized chloroprene latex that is used in the mixing step, not only latex obtained by a sulfur-copolymerized chloroprene latex preparation step but also sulfur-copolymerized chloroprene latex prepared in a different place may also be used, and commercially available sulfur-copolymerized chloroprene latex may also be used.

In the method for producing a sulfur-copolymerized chloroprene latex composition, the sulfur-copolymerized chloroprene latex and a nonionic surfactant are mixed together in at least one step of the polymerization step and the mixing step.

From the viewpoint of the superior storage stability of a sulfur-copolymerized chloroprene latex composition to be obtained, in the method for producing a sulfur-copolymerized chloroprene latex composition, it is preferable to mix the sulfur-copolymerized chloroprene latex and the nonionic surfactant before the sulfur-copolymerized chloroprene latex and the monobasic acid are mixed, and it is more preferable to polymerize the chloroprene monomer and sulfur in the polymerization step and mix the obtained sulfur-copolymerized chloroprene latex and the nonionic surfactant.

The nonionic surfactant is the same meaning as the nonionic surfactant that is contained in the above-described sulfur-copolymerized chloroprene latex composition, and a preferable aspect is also the same.

A mixing method of each component and a mixing method of the sulfur-copolymerized chloroprene latex and the nonionic surfactant in the mixing step are not particularly limited, and well-known mixing methods can be used.

The method for producing a sulfur-copolymerized chloroprene latex composition may further include a step other than the above-described polymerization step and mixing step (hereinafter, also referred to as "different step").

Examples of the different step include a step of purifying the sulfur-copolymerized chloroprene latex obtained in the polymerization step.

### <Modified asphalt emulsion composition>

A modified asphalt emulsion composition preferably contains a sulfur-copolymerized chloroprene latex composition and asphalt and more preferably contains a sulfur-copolymerized chloroprene latex composition, asphalt and water.

### <<Asphalt>>

The asphalt is not particularly limited, and well-known and publicly-used asphalt can be used. Examples of the asphalt include straight asphalt, blown asphalt, semi-blown asphalt, natural asphalt, modified asphalt, solvent-deasphalted asphalt, bituminous materials such as tar and pitch, A heavy oil, B heavy oil, and C heavy oil.

The content rate of the asphalt is preferably 50 to 99.9 mass%, more preferably 83 to 99 mass%, and still more preferably 89 to 99 mass% with respected to 100 mass% of the solid content of the modified asphalt emulsion composition.

In addition, the content rate of the asphalt is preferably 30 to 74 mass%, more preferably 40 to 72 mass%, and still more preferably 50 to 70 mass% with respected to 100 mass% of the modified asphalt emulsion composition.

One kind of asphalt may be used singly, or two or more kinds thereof may be used in combination.

The content of the solid content of the sulfur-copolymerized chloroprene latex with respect to 100 parts by mass of the solid content of the asphalt is preferably 0.5 to 20 parts by mass, more preferably 1.0 to 10 parts by mass and still more preferably 2.0 to 5.0 parts by mass.

### <<Water>>

The water is not particularly limited, and examples thereof include industrial water, tap water, ion exchange water, and pure water.

The content of the water is preferably 25 to 400 parts by mass, more preferably 35 to 230 parts by mass, and still more preferably 40 to 150 parts by mass with respected to 100 parts by mass of the solid content of the modified asphalt emulsion composition.

The modified asphalt emulsion composition may also contain a surfactant. Examples of the surfactant include at least one surfactant selected from cationic surfactants and nonionic surfactants. Among these, the surfactant is preferably a cationic surfactant.

Examples of the cationic surfactant include mixtures of an amine and an acid. Examples of the amine include primary amines, secondary amines, tertiary amines, and aliphatic diamines. Among these, amines having an alkyl group are more preferable.

Examples of the primary amines include laurylamine, myristylamine, 1-amino-3-undecanoxy-propane, cetylamine, stearylamine, oleylamine, and behenylamine. Alternatively, examples of the primary amines also include compounds in which a hydroxyl group is substituted with an amino group such as coconut oil, soybean oil, beef tallow, and hydrogenated beef tallow.

Examples of the tertiary amines include dimethyllaurylamine, dimethylstearylamine, dimethylmyristylamine, and amines in which a hydroxyl group is substituted with a dimethylamino group such as coconut oil and hydrogenated beef tallow.

An amine in which a hydroxyl group is substituted with a dimethylamino group such as hydrogenated beef tallow is also referred to as a dimethyl hydrogenated beef tallow amine.

The acid is preferably hydrochloric acid.

As a nonionic surfactant, it is possible to use the compounds described in the method for producing a sulfur-copolymerized chloroprene latex.

The modified asphalt emulsion composition may further contain a component other than the sulfur-copolymerized chloroprene latex, the asphalt, the surfactant, and the water (hereinafter, also referred to as "different component").

Examples of the different component include salts such as calcium chloride, a film-forming agent, a thickening stabilizer, a retardant, sand, and aggregate for the stabilization of emulsification.

When further containing sand and aggregate, the modified asphalt emulsion composition can be suitably used as a modified asphalt mixture.

The multiple stress creep recovery (MSCR) of the asphalt emulsion composition also relies on the solid content of the sulfur-copolymerized chloroprene latex in the modified asphalt emulsion composition, but is preferably 20% to 95%, more preferably 20% to 80%, still more preferably 20% to 60%, and particularly preferably 20% to 40% from the viewpoint of excellent aggregate graspability.

The MSCR of the modified asphalt emulsion composition can be obtained by a method described in Examples to be described below.

### [Method for producing modified asphalt emulsion composition]

A method for producing a modified asphalt emulsion composition preferably includes a step of obtaining a composition containing a sulfur-copolymerized chloroprene latex composition obtained by the method for producing a sulfur-copolymerized chloroprene latex composition and asphalt, includes a step of adding and/or mixing the sulfur-copolymerized chloroprene latex and asphalt, and more preferably includes a step of mixing the sulfur-copolymerized chloroprene latex and an asphalt emulsion. In the method for producing a modified asphalt emulsion composition, the asphalt is preferably an asphalt particle.

In addition, the method for producing a modified asphalt emulsion composition preferably includes a step of polymerizing a chloroprene monomer in the presence of 0.05 to 0.60 parts by mass of sulfur and water with respect to 100 parts by mass of the chloroprene monomer to obtain the sulfur-copolymerized chloroprene latex (hereinafter, also referred to as "sulfur-copolymerized chloroprene latex preparation step").

The method for producing a modified asphalt emulsion composition preferably includes a step of adding asphalt, a surfactant, and water (hereinafter, also referred to as "asphalt emulsion-forming step").

In the asphalt emulsion-forming step, the order of adding asphalt, the surfactant, and water is not particularly limited as long as the asphalt emulsion is formed, and these may be added separately or simultaneously. For example, the asphalt emulsion may be formed by adding a variety of surfactants to asphalt and then mixing the components with water.

In addition, regarding the order, asphalt may be added after the surfactant and water are added.

As a method for mixing the sulfur-copolymerized chloroprene latex, asphalt, the surfactant, and water is not particularly limited, and examples thereof include a variety of well-known methods such as methods in which the components are mixed with, for example, a defoaming kneader, a dry ball mill, a dry bead mill, a blade planetary motion-type mixer, a container rotation-type planetary motion mixer, a crusher, a mortar, a homogenizer, or a colloid mill. Among these, the mixing method is desirably a method in which the components are emulsified with a homogenizer or a colloid mill.

The method for producing a modified asphalt emulsion composition may include a step of adding the different component as necessary. In addition, the production method may include, for example, a step of adjusting the pH after the sulfur-copolymerized chloroprene latex preparation step.

The pH of the sulfur-copolymerized chloroprene latex composition after the step of adjusting the pH is preferably 1.0 to 4.5 and more preferably 1.5 to 3.5.

A pH adjuster that is used in the step of adjusting the pH is not particularly limited, and a well-known pH adjuster can be used.

The modified asphalt emulsion composition is preferably an asphalt emulsion composition produced by the method for producing the asphalt emulsion composition.

It is presumed that a composition that is obtained by the method for producing a modified asphalt emulsion composition, that is, a composition obtained by adding and/or mixing sulfur-copolymerized chloroprene latex and asphalt, has a sea-island structure in which chloroprene forms the sea portion.

The modified asphalt emulsion composition has excellent aggregate graspability and thus can be suitably used for road pavement. Examples of a method for road pavement include a chip seal method and include a method in which the asphalt emulsion composition and aggregate are overlaid in this order on the surface of a road and then compacted.

In the chip seal method, a road may be paved with a single layer in which one layer of the asphalt emulsion composition and one layer of the aggregate are each formed

(seal coating) or with a multilayer in which these single-layers are laminated (armor coating).

From the viewpoint of the excellent aggregate graspability, the modified asphalt emulsion composition can be applied to, in addition to the chip seal method, scrub sealing, tack coating, binders for roadbeds, and construction methods including an on-site base course recycling construction method and a cold in-place recycling method.

### Example

The present invention will be described by showing Examples and Comparative Examples below, but the present invention is not limited by the following examples.

### <Production of asphalt emulsion>

3.50 kg of pure water warmed to 80°C was put into a container having an inner capacity of five liters, and 24 g of a dimethyl hydrogenated beef tallow amine (manufactured by NOF Corporation, product name: NISSAN AMINE (registered trademark) ABT) as a surfactant, 19 g of 35 mass% hydrochloric acid (manufactured by Kanto Chemical Co., Inc.), and 14 g of calcium chloride (manufactured by Kanto Chemical Co., Inc.) were charged thereinto, thereby preparing a surfactant aqueous solution. This surfactant aqueous solution and 6.50 kg of straight asphalt heated and melted at 140°C (Showa Rekisei Industries Co., Ltd., product name: SA120-150) were emulsified with a colloid mill (IKA JAPAN K.K., product name: Magic LAB (registered trademark) XP) such that the asphalt emulsion production rate reached 0.5 L/minute, thereby obtaining an asphalt emulsion having the solid content of 65 mass%.

### (Production Example 1)

### <Production of sulfur-copolymerized chloroprene latex>

1.00 kg (100 parts by mass) of 2-chloro-1,3-butadiene (chloroprene) (manufactured by Tokyo Chemical Industry Co., Ltd.), 0.93 kg of pure water, 34 g of rosin acid (manufactured by Arakawa Chemical Industries, Ltd., ROSIN HTR), 1.0 g (0.10 parts by mass) of sulfur, 1.5 g of O,O-diisopropyl dithiobis(thioformate) (manufactured by Sanshin Trading Co., Ltd.), 5.9 g of potassium hydroxide, 4.9 g of sodium hydroxide and 0.44 mg of copper sulfate were charged into a reactor and emulsified to make the rosin acid into rosin acid soap (a mixture of potassium rosinate and sodium rosinate), potassium persulfate was then used as an initiator, polymerization was performed at a polymerization initial temperature of 40°C under a nitrogen gas atmosphere, when the polymerization conversion rate reached 90%, the temperature was raised up to 45°C, and polymerization was performed. The polymerization was terminated at the confirmation of a polymerization conversion rate of 95%.

Next, after that, an unreacted monomer was removed by steam distillation, 10 g of diethanol amine (manufactured by Nippon Shokubai Co., Ltd.) and 30 g of a polyoxyethylene alkyl ether 70% aqueous solution (manufactured by Kao Corporation, product name: EMULGEN 1118S-70) were added and mixed, thereby obtaining sulfur-copolymerized chloroprene latex having the solid content of 48.0 mass% and a gel content rate of 30 mass%. The gel content rate was obtained by a method to be described below.

### [Example 1]

### <<Production of sulfur-copolymerized chloroprene latex composition>>

0.77 g of acetic acid (manufactured by Kanto Chemical Co., Inc.) was added to and mixed with 100 g of the sulfur-copolymerized chloroprene latex synthesized in Production Example 1, and the pH was adjusted to 7.0, thereby obtaining a sulfur-copolymerized chloroprene latex composition.

### <<Production of asphalt emulsion composition>>

1.63 g of the sulfur-copolymerized chloroprene latex composition having a pH adjusted to 7.0 previously and adjusted again to 2.0 by adding 0.5 g of 35 mass% hydrochloric acid (manufactured by Kanto Chemical Co., Inc.) was added to and mixed with 40 g of the asphalt emulsion (having the solid content of 65 mass%) prepared above and heated to 60°C, thereby obtaining an asphalt emulsion composition.

The amount of the sulfur-copolymerized chloroprene latex added was determined so that the solid content in the sulfur-copolymerized chloroprene latex reached 3 parts by mass when the solid content in the asphalt emulsion was set to 100 parts by mass.

Specifically, the amount of the sulfur-copolymerized chloroprene latex added was calculated based on the following formula.

Amount of sulfur-copolymerized chloroprene latex added = amount of asphalt emulsion (40 g) × (content rate of solid content of asphalt emulsion) × (3 parts by mass/100 parts by mass) ÷ (content rate of solid content of sulfur-copolymerized chloroprene latex)

There are cases where hydrochloric acid is used for the purpose of pH adjustment after the preparation of the sulfur-copolymerized chloroprene latex, but hydrochloric acid is volatilized under the measurement condition of the solid content and thus have no influences on the solid content.

### <Gel content rate of sulfur-copolymerized chloroprene latex (tetrahydrofuran-insoluble component)>

The gel content rate of the sulfur-copolymerized chloroprene latex was obtained as the content rate of the sulfur-copolymerized chloroprene latex that was insoluble in tetrahydrofuran (THF) (tetrahydrofuran-insoluble component).

0.5 g of the sulfur-copolymerized chloroprene latex synthesized in Production Example 1 (the content of water in the latex was within a range of 40 mass% to 65 mass%) was added dropwise to 100 mL of tetrahydrofuran and shaken overnight, this THF solution was then separated with a centrifuge, and a THF-dissolved phase of the supernatant was extracted.

The extracted dissolved phase was heated to 100°C, tetrahydrofuran was evaporated and dried for one hour, and the mass of the sulfur-copolymerized chloroprene latex that had been dissolved in the THF-dissolved phase was calculated.

In addition, the mass of the sulfur-copolymerized chloroprene latex that had been dissolved in THF was subtracted from the mass of sulfur-copolymerized chloroprene in the sulfur-copolymerized chloroprene latex, and the result was further divided by the mass of the sulfur-copolymerized chloroprene in the sulfur-copolymerized chloroprene latex, thereby calculating the content rate of the sulfur-copolymerized chloroprene latex insoluble in tetrahydrofuran (tetrahydrofuran-insoluble component). The result is shown in Table 1.

### <Content rate of solid content>

The mass of 1 g of the sulfur-copolymerized chloroprene latex after being dried at 141°C for 30 minutes was multiplied by 100 and regarded as the solid content. This is also referred to as the solid content.

### [Evaluations]

### <Aggregate graspability>

Regarding the evaluation of the aggregate graspability, the multiple stress creep recovery (MSCR) was measured in accordance with AASHTO (the American Association of State Highway and Transportation Officials) T350-14 and evaluated as an index of the aggregate graspability.

Specifically, a rheometer (manufactured by Anton Paar GmbH, MCR301) was used for the measurement, and a parallel plate (diameter: 25 mm) regulated in JIS K 7244-10: 2005 was used as a measuring jig.

### <<Preparation of sample for MSCR measurement>>

40 g of the asphalt emulsion composition prepared above was poured into a silicone tray having a bottom area of 216 mm × 175 mm and a depth of 40 mm and spread throughout the entire tray. Next, the asphalt emulsion composition was dried at 23°C for 24 hours and then dried in an oven at 60°C for 24 hours, thereby obtaining a sample for multiple stress creep recovery (MSCR) measurement.

### <<Measurement>>

After the rheometer was set to 64°C, and the temperature was sufficiently adjusted, approximately 1.0 g of the sample for MSCR measurement produced above was set, a surplus part of the sample was removed, and measurement was performed.

The measurement was performed in the following steps.
(1) The deformation amount (A) before the application of stress is recorded.
(2) Stress of 3.2 kPa is applied for one second, and the deformation amount (B) at that time is recorded.
(3) After the application of the stress is stopped, the sample is left for nine seconds (during this time, the sample tends to return to the origin with rubber elasticity), and the deformation amount (C) after nine seconds elapses is recorded.

The steps (1) to (3) were repeated 10 cycles.

In each cycle, the return amount from deformation by the stress was calculated by the following formula. (Deformation amount (B) - deformation amount (C)) ÷ (deformation amount (B) - deformation amount (A)) × 100

A value from the above-described formula (the return amount from deformation by the stress) was calculated in each of the 10 cycles, and an arithmetic average value thereof was obtained as the initial value of MSCR.

Furthermore, the sulfur-copolymerized chloroprene latex was stored in a constant temperature bath at 38°C for three months, the preparation of a sample for MSCR measurement and MSCR measurement were performed in the same procedure, and MSCR after three months of storage at 38°C was obtained. The respective results are shown in Table 1.

In a case where the initial value of MSCR and MSCR after three months of storage at 38°C are 22% or more, the aggregate graspability can be said to be excellent. In addition, when MSCR exceeds 22%, it is possible to determine that the aggregate graspability is sufficient even in actual pavement.

In addition, the residual rate of the aggregate graspability was obtained by the following formula. Residual rate (%) of aggregate graspability = aggregate graspability after three months of storage at 38°C ÷ initial value of aggregate graspability × 100

The residual rate of the aggregate graspability is preferably 90% to 105%. When the residual rate of the aggregate graspability is within the above-described range, it is found that a temporal change is small (that is, the storage stability is excellent) and the asphalt emulsion composition is preferable as pavement.

### <Storage stability>

As an index of the storage stability, the change rate of the tensile strength at breaking (Tb) of a dry film that was obtained by drying the sulfur-copolymerized chloroprene latex composition was used.

The change rate of the strength of the dry film that was obtained from the sulfur-copolymerized chloroprene latex composition that had been treated for three months at 38°C with respect to the strength of the dry film that was obtained from the sulfur-copolymerized chloroprene latex composition immediately after the preparation was evaluated as the degree of alteration of the polymer (sulfur-copolymerized chloroprene).

### <<Tensile strength at breaking (Tb)>>

First, 60 g of the sulfur-copolymerized chloroprene latex composition produced above having the solid content adjusted to 40% by dilution with water was put into a TEFLON (registered trademark) container having a bottom area of 120 mm × 260 mm and a depth of 4 mm.

Next, the sulfur-copolymerized chloroprene latex composition was dried at 23°C for three days under an environment of a relative humidity of 50%, and the formed dry film was then turned over and further dried at 23°C for three days under an environment of a relative humidity of 50%. After that, the dry film was dried in an oven at 50°C for 30 minutes, thereby obtaining a dry film for evaluating the tensile strength at breaking (hereinafter, also referred to as "Tb").

The dry film for the evaluation was cut into a No. 6 dumbbell shape of JIS K 6251: 2017, and a tensile test was performed with a tensile tester (UTM-I-2500). The tensile rate was set to 200 mm/minute, stress at break was indicated by Tb, and this was regarded as the Tb initial value.

Furthermore, the dry film for the evaluation was stored in a constant temperature bath at 38°C for three months, and a tensile test was performed in the same procedure as described above. The result was regarded as Tb after three months of storage at 38°C and shown in Table 1.

In addition, the Tb change rate was obtained by assignment into the following formula. Tb change rate (%) = (Tb after three months of storage at 38°C - Tb initial value) ÷ Tb initial value × 100

For dry films having a Tb change rate of more than -10% and +50% or less, the alteration of the polymer during storage is small, and the storage stability can be thus determined to be excellent. In addition, when both the Tb initial value and the value of Tb after three months of storage at 38°C are 5.5 MPa or more, the sulfur-copolymerized chloroprene latex composition can be determined to have practically sufficient performance.

### [Comparative Examples 1 to 7]

Sulfur-copolymerized chloroprene latex was prepared and obtained in the same manner as in Production Example 1 and Example 1 except that the amounts and kinds of sulfur, the nonionic surfactant and the acid were changed to amounts shown in Table 1 in Comparative Examples 1 to 7. In addition, asphalt emulsion compositions were prepared in the same manner as in Example 1 using the prepared sulfur-copolymerized chloroprene latex.

Samples for MSCR measurement were prepared using the obtained asphalt emulsion compositions, and the aggregate graspability and the tensile strengths at cutting (Tb) were evaluated. The results are shown in Table 1.

In Comparative Example 8, sulfur-copolymerized chloroprene latex was prepared, and a sulfur-copolymerized chloroprene latex composition was obtained in the same manner as in Production Example 1 and Example 1 except that the amounts and kinds of sulfur, the nonionic surfactant and the acid were changed to amounts shown in Table 1.

**[Table 1]**

| | | Example 1 | Comparative Example 1 | Comparative Example 2 | Comparative Example 3 | Comparative Example 4 |
|---|---|---|---|---|---|---|
| Amount of sulfur copolymerized (parts by mass) | | 0.1 | 0.1 | 0.1 | 0.1 | 0.1 |
| Amount of nonionic surfactant added (parts by mass) | | 3 | 0 | 3 | 3 | 3 |
| Acid | Kind | AcOH | - | - | HCl | HCl |
| | pKa | 4.8 | - | - | -3.7 | -3.7 |
| pH of sulfur-copolymerized chloroprene latex composition | | 7 | 13 | 13 | 7 | 2 |
| Gel content rate of sulfur-copolymerized chloroprene latex composition (mass%) | | 30 | 30 | 30 | 30 | 30 |
| Aggregate graspability | Initial value of MSCR | 27.3 | 20.4 | 20.4 | 20.4 | 20.4 |
| | After three months of storage at 38°C | 25.0 | 26.1 | 22.4 | 27.6 | 26.6 |
| Storage stability | Residual rate of aggregate graspability (%) | 92 | 128 | 110 | 135 | 130 |
| Tensile strength at breaking | Initial value (MPa) | 6.24 | 11.44 | 5.38 | 9.14 | 4.12 |
| | After three months of storage at 38°C (MPa) | 8.15 | 6.26 | 2.83 | 7.26 | 6.58 |
| Storage stability | Tb change rate (%) | 31 | -45 | -47 | -21 | 60 |

**Table 1 (continued)**

| | | Comparative Example 5 | Comparative Example 6 | Comparative Example 7 | Comparative Example 8 |
|---|---|---|---|---|---|
| Amount of sulfur copolymerized (parts by mass) | | 0.1 | 0.1 | 0.1 | 0.1 |
| Amount of nonionic surfactant added (parts by mass) | | 3 | 3 | 3 | 0 |
| Acid | Kind | HNO₃ | Citric acid | TsOH | AcOH |
| | pKa | -1.3 | 3.15 4.77 6.40 | -2.8 | 4.8 |
| pH of sulfur-copolymerized chloroprene latex composition | | 7 | 7 | 7 | 7 |
| Gel content rate of sulfur-copolymerized chloroprene latex composition (mass%) | | 30 | 30 | 30 | 30 |
| Aggregate graspability | Initial value of MSCR | 20.6 | 16.0 | 25.6 | - |
| | After three months of storage at 38°C | 25.4 | 21.4 | 21.9 | - |
| Storage stability | Residual rate of aggregate graspability (%) | 124 | 134 | 86 | - |
| Tensile strength at breaking | Initial value (MPa) | 3.82 | 7.84 | 3.92 | - |
| | After three months of storage at 38°C (MPa) | 2.74 | 6.24 | 0.55 | - |
| Storage stability | Tb change rate (%) | -28 | -20 | -86 | - |

In the table, "-" means that the corresponding component is not contained. In addition, "-" in the cells of "aggregate graspability" and "tensile strength at breaking " for Comparative Example 8 mean that, in the production of the sulfur-copolymerized chloroprene latex composition, an agglomerate was generated or precipitated during the addition of acetic acid, and it was not possible to perform the evaluations.

In the table, "AcOH" means acetic acid, "HCl" means hydrochloric acid, "HNO₃" means nitrate, and "TsOH" means p-toluenesulfonic acid, respectively.

In the sulfur-copolymerized chloroprene latex composition of Example 1, compared with the sulfur-copolymerized chloroprene latex compositions of Comparative Examples 1 to 7, the storage stability when the latex was stored in a film state for a long period of time (that is, the fact that the alteration of the polymer during the storage was small and the strength of the dry film did not decrease) significantly improved.

It was confirmed that both the sulfur-copolymerized chloroprene latex composition immediately after the preparation and the asphalt emulsion composition modified using the sulfur-copolymerized chloroprene latex to which a heat treatment had been added for a long period of time had high aggregate graspability.

It is found that, in the asphalt emulsion composition containing the sulfur-copolymerized chloroprene latex composition of Example 1, MSCR was more than 22% and the aggregate graspability was excellent in any case of immediately after the preparation and after three months of the treatment under 38.

In the sulfur-copolymerized chloroprene latex composition and the modified asphalt emulsion composition of Comparative Example 8, a rubber agglomerate was generated or precipitated during the addition of acetic acid, a function as latex could not be maintained and was inappropriate. Therefore, in Comparative Example 8, it was not possible to measure MSCR or the tensile strength at breaking (Tb).

The modified asphalt emulsion composition of Example 1 is excellent in terms of such MSCR and aggregate graspability and is thus capable of exhibiting favorable performance even in the case of being used in, in addition to chip seal, scrub sealing, tack coating, binders for roadbeds, and construction methods including on-site base course recycling and a cold in-place recycling method.

## Claims

1. A method for producing a sulfur-copolymerized chloroprene latex composition, comprising:
a polymerization step of polymerizing a chloroprene monomer and sulfur to obtain sulfur-copolymerized chloroprene latex; and
a mixing step of mixing the sulfur-copolymerized chloroprene latex and a monobasic acid having a pKa of 4.0 to 6.0,
wherein, in at least one step of the polymerization step and the mixing step, the sulfur-copolymerized chloroprene latex and a nonionic surfactant are mixed together.

2. The method for producing a sulfur-copolymerized chloroprene latex composition according to claim 1, wherein the nonionic surfactant includes a polyoxyalkylene structure.

3. The method for producing a sulfur-copolymerized chloroprene latex composition according to claim 1 or 2, wherein the monobasic acid is acetic acid.

4. A method for producing a modified asphalt emulsion composition, comprising a step of obtaining a composition containing a sulfur-copolymerized chloroprene latex composition obtained by the method for producing a sulfur-copolymerized chloroprene latex composition according to claim 1 or 2 and asphalt.

5. A sulfur-copolymerized chloroprene latex comprising: sulfur-copolymerized chloroprene latex; a nonionic surfactant; and a monobasic acid,
wherein the monobasic acid has a pKa of 4.0 to 6.0.

6. The sulfur-copolymerized chloroprene latex composition according to claim 5, wherein the nonionic surfactant includes a polyoxyalkylene structure.

7. The sulfur-copolymerized chloroprene latex composition according to claim 5 or 6, wherein the monobasic acid is acetic acid.

8. A modified asphalt emulsion composition comprising: the sulfur-copolymerized chloroprene latex composition according to claim 5 or 6; and asphalt.

9. The modified asphalt emulsion composition according to claim 8, further comprising sand and aggregate.

10. The modified asphalt emulsion composition according to claim 8, that is a modified asphalt mixture.
